# EUROPEAN PATENT SPECIFICATION

(11) **EP 3 777 399 B1**
(45) Date of publication and mention of the grant of the patent: **11.10.2023**
(21) Application number: 19721419.0
(22) Date of filing: 01.04.2019
(51) Int. Cl.: H04W 4/40, H04W 72/23, H04W 72/02, H04W 74/08

(54) **HYBRID OPERATION MODE FOR VEHICLE-TO-EVERYTHING COMMUNICATIONS**
HYBRIDBETRIEBSVERFAHREN FÜR VEHICLE-TO-EVERYTHING-KOMMUNIKATIONEN
MODE DE FONCTIONNEMENT HYBRIDE POUR COMMUNICATIONS DE VÉHICULE À TOUT

(30) Priority: 03.04.2018 US 201862652023 P; 29.03.2019 US 201916370400
(43) Date of publication of application: 17.02.2021
(73) Proprietor: QUALCOMM Incorporated, San Diego, CA 92121-1714 (US)
(72) Inventor: CHENG, Hong, San Diego, CA 92121-1714 (US); LI, Junyi, San Diego, CA 92121-1714 (US); VANDERVEEN, Michaela, San Diego, CA 92121-1714 (US); WU, Zhibin, San Diego, CA 92121-1714 (US); BAGHEL, Sudhir, Kumar, San Diego, CA 92121-1714 (US); PATIL, Shailesh, San Diego, CA 92121-1714 (US); GULATI, Kapil, San Diego, CA 92121-1714 (US)
(74) Representative: Dunlop, Hugh Christopher
(86) International application number: PCT/US2019/025152
(87) International publication number: WO 2019/195151

(56) References cited:
- WO-A1-2017/027355
- US-A1- 2016 302 231

## Description

### CROSS REFERENCES

### BACKGROUND

The following relates generally to unlicensed, wireless communication, and more specifically to autonomous uplink communications.

Wireless communication systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems. A wireless multiple-access communication system may include a number of base stations, each simultaneously supporting communication for multiple communication devices, which may be otherwise known as user equipments (UEs). Relevant prior art is disclosed in US2016/302231A1 and in WO2017/027355A1.

### SUMMARY

The present disclosure relates to a method and an apparatus for wireless communications that support a hybrid operation mode for vehicle-to-everything (V2X) communications. The method and apparatus may be implemented by a user equipment (UE). The invention is defined by the appended independent claims and further embodiments are described by the dependent claims.

### BRIEF DESCRIPTION OF THE DRAWINGS

FIG. 1 illustrates an example wireless network in accordance with aspects of the present disclosure.
FIG. 2 illustrates an example logical architecture of a distributed radio access network (RAN) in accordance with aspects of the present disclosure.
FIG. 3 illustrates an example physical architecture of a distributed RAN in accordance with aspects of the present disclosure.
FIG. 4 illustrates example components of a base station and a user equipment (UE) in a wireless communications system in accordance with aspects of the present disclosure.
FIG. 5A is a diagram illustrating an example of a downlink (DL)-centric subframe according to some aspects of the present disclosure.
FIG. 5B is a diagram illustrating an example of an uplink (UL)-centric subframe according to some aspects of the present disclosure.
FIG. 6 illustrates a wireless communications system in accordance with aspects of the present disclosure.
FIG. 7 illustrates a flowchart including a method for a hybrid operation mode for vehicle-to-everything (V2X) communications.
FIG. 8 illustrates certain components that may be included within a base station in accordance with aspects of the present disclosure.
FIG. 9 illustrates certain components that may be included within a wireless communication device in accordance with aspects of the present disclosure.

### DETAILED DESCRIPTION

In some wireless communications systems, such as 5th Generation (5G) New Radio (NR) systems, transmission waveforms may include cyclic prefix orthogonal frequency division multiplexing (CP-OFDM) and discrete Fourier transform-spread (DFT-S) OFDM. 5G allows for switching between both CP-OFDM and DFT-S-OFDM on the uplink (UL) to get the multiple input multiple output (MIMO) spatial multiplexing benefit of CP-OFDM and the link budget benefit of DFT-S-OFDM. With Long Term Evolution (LTE), orthogonal frequency division multiple access (OFDMA) communication signals may be used for downlink (DL) communications, while singlecarrier frequency division multiple access (SC-FDMA) communication signals may be used for LTE UL communications. The DFT-s-OFDMA scheme spreads a set of data symbols (i.e., a data symbol sequence) over a frequency domain which is different from the OFDMA scheme. Also, in comparison to the OFDMA scheme, the DFT-s-OFDMA scheme can greatly reduce the peak to average power ratio (PAPR) of a transmission signal. The DFT-s-OFDMA scheme may also be referred to as an SC-FDMA scheme.

Scalable OFDM multi-tone numerology is another feature of 5G. Prior versions of LTE supported a mostly fixed OFDM numerology of fifteen (15) kilohertz (kHz) spacing between OFDM tones (often called subcarriers) and carrier bandwidths up to twenty (20) megahertz (MHz). Scalable OFDM numerology has been introduced in 5G to support diverse spectrum bands/types and deployment models. For example, 5G NR is able to operate in millimeter wave (mmW) bands that have wider channel widths (e.g., hundreds of MHz) than bands in use in LTE. Also, the OFDM subcarrier spacing may scale with the channel width, so the fast Fourier transform (FFT) size may also scale such that the processing complexity does not increase unnecessarily for wider bandwidths. In the present application, numerology may refer to the different values that different features (e.g., subcarrier spacing, cyclic prefix (CP), symbol length, FFT size, transmission time interval (TTI), etc.) of a communication system can take.

Also in 5G NR, cellular technologies have been expanded into the unlicensed spectrum (e.g., both stand-alone and licensed-assisted access (LAA)). In addition, the unlicensed spectrum may occupy frequencies up to sixty (60) gigahertz (GHz), also known as mmW. The use of unlicensed bands provides added capacity for communications in the system.

A first member of this technology family is referred to as LTE Unlicensed (LTE-U). By aggregating LTE in unlicensed spectrum with an 'anchor' channel in licensed spectrum, faster downloads are enabled for customers. Also, LTE-U may share the unlicensed spectrum fairly with Wi-Fi. This is an advantage because in the five (5) GHz unlicensed band where Wi-Fi devices are in wide use, it is desirable for LTE-U to coexist with Wi-Fi. However, an LTE-U network may cause radio frequency (RF) interference to an existing co-channel Wi-Fi device. Choosing a preferred operating channel and minimizing the interference caused to nearby Wi-Fi networks may be a goal for LTE-U devices. However, an LTE-U single carrier (SC) device may operate on the same channel as Wi-Fi if all available channels are occupied by Wi-Fi devices. To coordinate spectrum access between LTE-U and Wi-Fi, the energy across the intended transmission band may first be detected. This energy detection (ED) mechanism informs the device of ongoing transmissions by other nodes. Based on this ED information, a device decides if it should transmit on the intended transmission band. Wi-Fi devices may not back off for LTE-U transmissions unless the interference level caused by the LTE-U transmissions is above an ED threshold (e.g., negative sixty-two (-62) decibelmilliwatts (dBm) over 20 MHz). Thus, without proper coexistence mechanisms in place, LTE-U transmissions could cause considerable interference on a Wi-Fi network relative to Wi-Fi transmissions.

LAA is another member of the unlicensed technology family. Like LTE-U, it may also use an anchor channel in licensed spectrum. However, it also adds "listen before talk" (LBT) operations to the LTE functionality.

A gating interval may be used to gain access to a channel of a shared spectrum. The gating interval may determine the application of a contention-based protocol such as an LBT protocol. The gating interval may indicate when a clear channel assessment (CCA) is performed. Whether a channel of the shared unlicensed spectrum is available or in use is determined by the CCA. If the channel is "clear" for use, i.e., available, the gating interval may allow the transmitting apparatus to use the channel. Access to the channel is typically granted for a predefined transmission interval. Thus, with unlicensed spectrum, an LBT procedure is performed before transmitting a message. If the channel is not cleared for use, then a device will not transmit on the channel.

Another member of this family of unlicensed technologies is LTE-wireless local area network (WLAN) Aggregation (LWA), which may utilize both LTE and Wi-Fi. Accounting for both channel conditions, LWA can split a single data flow into two data flows which allows both the LTE and the Wi-Fi channel to be used for an application. Instead of competing with Wi-Fi, the LTE signal may use the WLAN connections seamlessly to increase capacity.

The final member of this family of unlicensed technologies is MulteFire. MulteFire opens up new opportunities by operating Fourth Generation (4G) LTE technology solely in unlicensed spectrum such as the global 5 GHz. Unlike LTE-U and LAA, MulteFire may support entities without any access to the licensed spectrum. Thus, it operates in unlicensed spectrum on a standalone basis (e.g., without any anchor channel in the licensed spectrum). Thus, MulteFire differs from LTE-U, LAA, and LWA because LTE-U, LAA, and LWA aggregate unlicensed spectrum with an anchor in licensed spectrum. Without relying on licensed spectrum as the anchoring service, MulteFire allows for Wi-Fi-like deployments. A MulteFire network may include access points (APs) and/or base stations communicating in an unlicensed radio frequency spectrum band (e.g., without a licensed anchor carrier).

Discovery reference signal (DRS) measurement timing configuration (DMTC) is a technique that allows MulteFire to transmit with minimal or reduced interference to other unlicensed technologies, including Wi-Fi. Additionally, the periodicity of discovery signals in MulteFire may be very sparse. This allows MulteFire to access channels occasionally, transmit discovery and control signals, and then vacate the channels. Since the unlicensed spectrum is shared with other radios of similar or dissimilar wireless technologies, a so-called LBT method may be applied for channel sensing. LBT may include sensing the medium for a pre-defined minimum amount of time and backing off if the channel is busy. Therefore, the initial random access (RA) procedure for standalone LTE-U may involve a minimal number of transmissions with low latency, such that the number of LBT operations may be minimized or reduced and the RA procedure may be completed quickly.

Leveraging a DMTC window, MulteFire algorithms may search and decode reference signals in unlicensed bands from neighboring base stations in order to find which base station to select to serve the user. As the caller moves past one base station, their user equipment (UE) may send a measurement report to the base station, triggering a handover procedure and transferring the caller (and all of their content and information) to the next base station.

Since LTE traditionally operates in licensed spectrum and Wi-Fi operates in unlicensed bands, coexistence with Wi-Fi or other unlicensed technology was not considered when LTE was designed. In moving to the unlicensed world, the LTE waveform was modified and algorithms were added in order to perform LBT. This may support the ability to share a channel with unlicensed incumbents, including Wi-Fi, by not immediately acquiring the channel and transmitting. The present example supports LBT and the detection and transmission of Wi-Fi Channel Usage Beacon Signals (WCUBSs) for ensuring coexistence with Wi-Fi neighbors.

MulteFire was designed to "hear" a neighboring Wi-Fi base station's transmission. MulteFire may listen first and autonomously make the decision to transmit when there is no other neighboring Wi-Fi transmitting on the same channel (e.g., within a threshold range). This technique may ensure co-existence between MulteFire and Wi-Fi transmissions.

The Third Generation Partnership Project (3GPP) and the European Telecommunications Standards Institute (ETSI) mandate an LBT detection threshold (e.g., a negative seventy-two (-72) dBm LBT detection threshold). This threshold may further help wireless devices avoid transmitting messages that interfere with Wi-Fi. MulteFire's LBT design may be similar or identical to the standards defined in 3GPP for LAA/enhanced LAA (eLAA) and may comply with ETSI rules.

An expanded functionality for 5G involves the use of 5G NR spectrum sharing (NR-SS). 5G NR-SS may enable enhancement, expansion, and/or upgrade of the spectrum sharing technologies introduced in LTE. These include LTE Wi-Fi Aggregation (LWA), LAA, eLAA, Citizen's Broadband Radio service (CBRS)/License Shared Access (LSA), or any combination of these technologies.

The present methods, systems, devices, and apparatuses describe a hybrid mode of operation for vehicle-to-everything (V2X) operation which may allow higher efficiency of spectrum use. This hybrid mode of operation may be referred to as "Mode 3.5." The hybrid mode of operation may support resource selection for communicating in a wireless communications system using a combination of network allocation and UE contention. The hybrid operation mode (e.g., for V2X communications) may reduce signaling overhead for the network as compared to a network allocation mode while increasing organization and efficient spectrum usage as compared to a UE-based resource selection mode.

Aspects of the disclosure are initially described in the context of a wireless communications system. Aspects of the disclosure are then illustrated by and described with reference to apparatus diagrams, system diagrams, and flowcharts that relate to a hybrid operation mode for V2X communications.

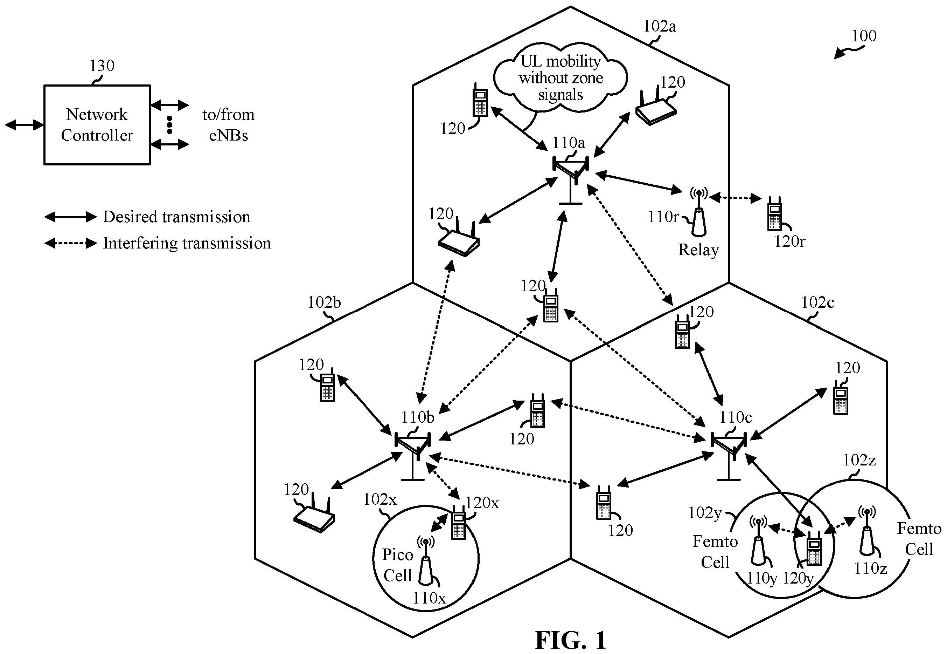

**FIG.** 1 illustrates an example wireless network 100, such as an NR or 5G network, in accordance with aspects of the present disclosure. The wireless network 100 may include a number of base stations 110 and other network entities. A base station 110 may be a station that communicates with UEs 120. Each base station 110 may provide communication coverage for a particular geographic area. In 3GPP, the term "cell" may refer to a coverage area of a Node B and/or a Node B subsystem serving this coverage area, depending on the context in which the term is used. In NR systems, the term "cell" and evolved Node B (eNB), Node B, 5G NB, AP, NR base station, 5G Radio NodeB (gNB), or transmission/reception point (TRP) may be interchangeable. In some aspects, a cell may not necessarily be stationary, and the geographic area of the cell may move according to the location of a mobile base station 120. In some aspects, the base stations 110 may be interconnected to one another and/or to one or more other base stations 110 or network nodes (not shown) in the wireless network 100 through various types of backhaul interfaces such as a direct physical connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a frequency channel, etc. Each frequency may support a single RAT in a given geographic area in order to avoid interference between wireless networks of different RATs. In some cases, NR or 5G RAT networks may be deployed.

A base station 110 may provide communication coverage for a macro cell, a pico cell, a femto cell, and/or other types of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscriptions. A femto cell may cover a relatively small geographic area (e.g., a home) and may allow restricted access by UEs 120 having association with the femto cell (e.g., UEs in a Closed Subscriber Group (CSG), UEs for users in the home, etc.). A base station 110 for a macro cell may be referred to as a macro base station. A base station for a pico cell may be referred to as a pico base station. A base station for a femto cell may be referred to as a femto base station or a home base station. In the example shown in FIG. 1, the base stations 110a, 110b, and 110c may be macro base stations for the macro cells 102a, 102b, and 102c, respectively. The base station 110x may be a pico base station for a pico cell 102x. The base stations 110y and 110z may be femto base stations for the femto cells 102y and 102z, respectively. A base station may support one or multiple (e.g., three) cells.

The wireless network 100 may also include relay stations. A relay station is a station that receives a transmission of data and/or other information from an upstream station (e.g., a base station 110 or a UE 120) and sends a transmission of the data and/or other information to a downstream station (e.g., a UE 120 or a base station 110). A relay station may also be a UE 120 that relays transmissions for other UEs 120. In the example shown in FIG. 1, a relay station 110r may communicate with the base station 110a and a UE 120r in order to facilitate communication between the base station 110a and the UE 120r. A relay station may also be referred to as a relay base station, a relay, etc.

The wireless network 100 may be a heterogeneous network that includes base stations 110 of different types, e.g., macro base stations, pico base stations, femto base stations, relays, etc. These different types of base stations may have different transmit power levels, different coverage areas, and may have differing impacts on interference in the wireless network 100. For example, a macro base station may have a high transmit power level (e.g., 20 Watts) whereas a pico base station, or a femto base station, or a relay may have a lower transmit power level (e.g., one (1) Watt).

The wireless network 100 may support synchronous or asynchronous operation. For synchronous operation, the base stations 110 may have similar frame timing, and transmissions from different base stations 110 may be approximately aligned in time. For asynchronous operation, the base stations 110 may have different frame timing, and transmissions from different base stations 110 may not be aligned in time. The techniques described herein may be used for both synchronous and asynchronous operation.

A network controller 130 may be coupled with a set of base stations 110 and provide coordination and control for these base stations 110. The network controller 130 may communicate with the base stations 110 via a backhaul. The base stations 110 may also communicate with one another, e.g., directly or indirectly via wireless or wireline backhaul.

The UEs 120 (e.g., 120x, 120y, etc.) may be dispersed throughout the wireless network 100, and each UE may be stationary or mobile. A UE 120 may also be referred to as a mobile station, a terminal, an access terminal, a subscriber unit, a station, a customer premises equipment (CPE), a cellular phone, a smart phone, a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or medical equipment, a healthcare device, a biometric sensor/device, a wearable device such as a smart watch, smart clothing, smart glasses, virtual reality goggles, a smart wrist band, smart jewelry (e.g., a smart ring, a smart bracelet, etc.), an entertainment device (e.g., a music device, a video device, a satellite radio, etc.), a vehicular component or sensor, a smart meter/sensor, a robot, a drone, industrial manufacturing equipment, a positioning device (e.g., global positioning system (GPS), Beidou, terrestrial, etc.), or any other suitable device that is configured to communicate via a wireless or wired medium.

Some UEs 120 may be considered machine-type communication (MTC) devices or evolved MTC (eMTC) devices, which may include remote devices that may communicate with a base station 110, another remote device, or some other entity. MTC may refer to communication involving at least one remote device on at least one end of the communication and may include forms of data communication which involve one or more entities that do not necessarily need human interaction. MTC UEs may include UEs 120 that are capable of MTC communications with MTC servers and/or other MTC devices through Public Land Mobile Networks (PLMNs), for example. MTC and enhanced MTC (eMTC) UEs include, for example, robots, drones, remote devices, sensors, meters, monitors, cameras, location tags, etc., that may communicate with a base station 110, another device (e.g., remote device), or some other entity. A wireless node may provide, for example, connectivity for or to a network (e.g., a wide area network such as the Internet or a cellular network) via a wired or wireless communication link. MTC UEs, as well as other UEs 120, may be implemented as Internet-of Things (IoT) devices, e.g., narrowband IoT (NB-IoT) devices. In NB IoT, the UL and DL have higher periodicities and repetitions interval values as a UE 120 decodes data in extended coverage.

In FIG. 1, a solid line with double arrows indicates desired transmissions between a UE 120 and a serving base station, which is a base station 110 designated to serve the UE 120 on the DL and/or UL. A dashed line with double arrows indicates interfering transmissions between a UE 120 and a base station 110.

Certain wireless networks (e.g., LTE) utilize OFDM on the DL and singlecarrier frequency division multiplexing (SC-FDM) on the UL. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers, K, may be dependent on the system bandwidth. For example, the spacing of the subcarriers may be 15 kHz and the minimum resource allocation (called a `resource block') may be twelve (12) subcarriers (or one hundred eighty (180) kHz). Consequently, the nominal FFT size may be equal to one hundred and twenty-eight (128), two hundred and fifty-six (256), five hundred and twelve (512), one thousand twenty-four (1024), or two thousand forty-eight (2048) for system bandwidth of 1.25, 2.5, 5, 10 or 20 MHz, respectively. The system bandwidth may also be partitioned into subbands. For example, a subband may cover 1.08 MHz (e.g., six (6) resource blocks), and there may be 1, two (2), four (4), eight (8), or sixteen (16) subbands for system bandwidth of 1.25, 2.5, 5, 10 or 20 MHz, respectively.

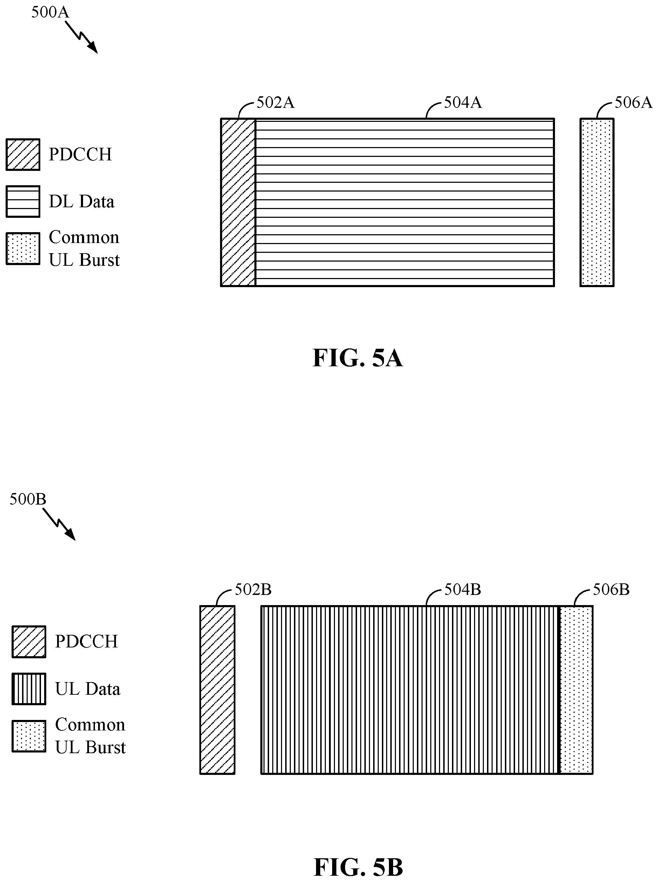

While aspects of the examples described herein may be associated with LTE technologies, aspects of the present disclosure may be applicable with other wireless communications systems, such as NR or other wireless communications systems. NR may utilize OFDM with a CP on the UL and DL and may include support for halfduplex operation using time division duplex (TDD). A single component carrier bandwidth of one hundred (100) MHz may be supported. NR resource blocks may span 12 subcarriers with a subcarrier bandwidth of seventy-five (75) kHz over a 0.1 milliseconds (ms) duration. Each radio frame may consist of fifty (50) subframes with a length of 10 ms. Consequently, each subframe may have a length of 0.2 ms. Each subframe may indicate a link direction (e.g., DL or UL) for data transmission and the link direction for each subframe may be dynamically switched. Each subframe may include DL/UL data as well as DL/UL control data. UL and DL subframes (e.g., for NR) may be described in more detail with respect to FIGs. 5A and 5B. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE 120. Multi-layer transmissions with up to 2 streams per UE may be supported. Aggregation of multiple cells may be supported with up to 8 serving cells. Alternatively, NR may support a different air interface, other than an OFDM-based interface. NR networks may include entities such central units (CUs) and/or distributed units (DUs).

In some aspects, access to the air interface may be scheduled, where a scheduling entity (e.g., a base station 110) allocates resources for communication among some or all devices and equipment within its service area or cell. Within the present disclosure, as discussed further herein, the scheduling entity may be responsible for scheduling, assigning, reconfiguring, and releasing resources for one or more subordinate entities. That is, for scheduled communication, subordinate entities utilize resources allocated by the scheduling entity. Base stations 110 are not the sole entities that may function as a scheduling entity. That is, in some aspects, a UE 120 may function as a scheduling entity, scheduling resources for one or more subordinate entities (e.g., one or more other UEs 120). In this aspect, a first UE 120 is functioning as a scheduling entity, and other UEs 120 utilize resources scheduled by the first UE 120 for wireless communication. A UE 120 may function as a scheduling entity in a peer-to-peer (P2P) network and/or in a mesh network. In a mesh network example, UEs 120 may optionally communicate directly with one another in addition to communicating with the scheduling entity.

Thus, in a wireless communication network with a scheduled access to time-frequency resources and having a cellular configuration, a P2P configuration, and a mesh configuration, a scheduling entity and one or more subordinate entities may communicate utilizing the scheduled resources.

In some cases (e.g., when operating in a hybrid operation mode for V2X communications), the scheduling of transmissions may be split between multiple entities. For example, a base station 110 may perform group-level scheduling for a group of UEs 120, while a UE 120 may perform UE-specific scheduling for that UE 120. In some cases, this type of scheduling may be performed for communications between different UEs 120 (e.g., vehicle-to-vehicle (V2V) communications).

As discussed herein, a radio access network (RAN) may include a CU and one or more DUs. An NR base station (e.g., eNB, 5G Node B, Node B, TRP, AP, or gNB) may correspond to one or multiple base stations 110. NR cells may be configured as access cell (ACells) or data only cells (DCells). For example, the RAN (e.g., a CU or DU) may configure the cells. DCells may be cells used for carrier aggregation or dual connectivity, but not used for initial access, cell selection/reselection, or handover. In some cases, DCells may not transmit synchronization signals (SS), and in other cases, DCells may transmit SS. NR base stations may transmit DL signals to UEs 120 indicating the cell type. Based on the cell type indication, the UE 120 may communicate with the NR base station. For example, the UE 120 may determine NR base stations to consider for cell selection, access, handover, and/or measurement based on the indicated cell type.

The wireless network 100 may support a hybrid operation mode for V2X communications. For example, UEs 120 in the wireless network 100 may be examples of vehicles operating in an NR system. In the hybrid operation mode, a base station 110 may perform a "coarse" allocation of resources (e.g., at a group level, rather than a UE level) for a set of UEs 120. One or more UEs 120 in the set of UEs 120 may perform resource contention to gain access to a subset of the coarsely allocated resources. The coarse allocation of resources may reduce the signaling in the system (e.g., as compared to a "fine" or individual allocation of resources to each specific UE 120), avoiding overly conservative resource allocation. This may allow for an efficient usage of the resources in the spectrum. The UE-specific resource contention may reduce collisions and improve reliability of the transmissions in the coarsely allocated resources for the assigned group of UEs.

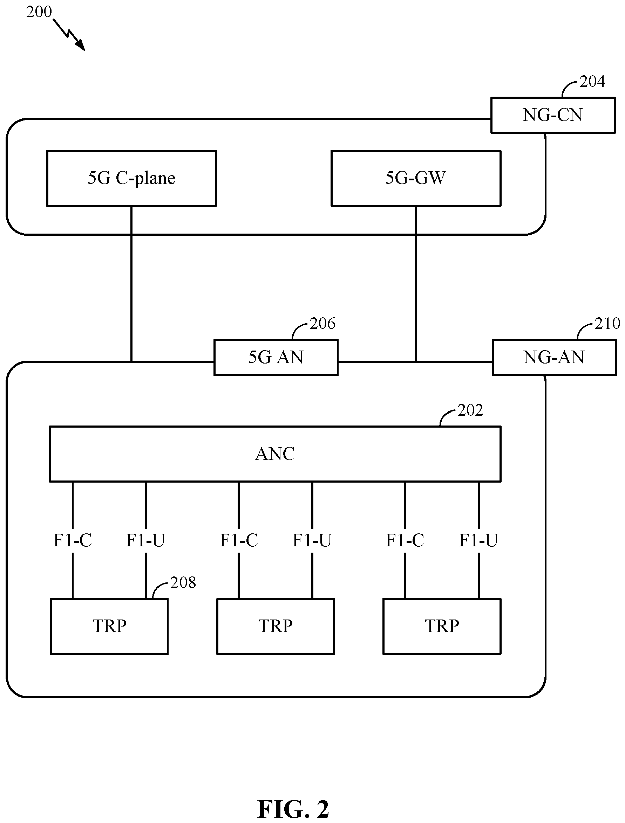

**FIG.** 2 illustrates an example logical architecture of a distributed radio access network (RAN) 200 in accordance with aspects of the present disclosure. The distributed RAN 200 may be implemented in the wireless communication system illustrated in FIG. 1. A 5G access node 206 may include an access node controller (ANC) 202. The ANC may be a CU of the distributed RAN 200. The backhaul interface to the next generation core network (NG-CN) 204 may terminate at the ANC 202. The backhaul interface to neighboring next generation access nodes (NG-ANs) 210 may terminate at the ANC 202. The ANC 202 may include one or more TRPs 208 (which may also be referred to as base stations, NR base stations, Node Bs, 5G NBs, APs, eNBs, gNBs, or some other term). As described herein, a TRP 208 may be used interchangeably with "cell."

The TRPs 208 may be examples of DUs. The TRPs 208 may be connected to one ANC (e.g., ANC 202) or more than one ANC. For example, for RAN sharing, radio as a service (RaaS), and service specific ANC deployments, the TRP 208 may be connected to more than one ANC 202. A TRP 208 may include one or more antenna ports. The TRPs 208 may be configured to individually (e.g., in dynamic selection) or jointly (e.g., in joint transmission) serve traffic to a UE.

The local architecture may be used to illustrate fronthaul definition. The architecture may be defined such that it may support fronthauling solutions across different deployment types. For example, the architecture may be based on transmit network capabilities (e.g., bandwidth, latency, and/or jitter).

The architecture may share features and/or components with LTE. According to aspects, the NG-AN 210 may support dual connectivity with NR. The NG-AN 210 may share a common fronthaul for LTE and NR.

The architecture may enable cooperation between and among TRPs 208. For example, cooperation may be preset within a TRP 208 and/or across TRPs 208 via the ANC 202. According to aspects, no inter-TRP interface may be needed/present.

According to aspects, a dynamic configuration of split logical functions may be present within the architecture. The Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU or CU (e.g., TRP 208 or ANC 202, respectively). According to certain aspects, a base station may include a CU (e.g., ANC 202) and/or one or more distributed units (e.g., one or more TRPs 208). The logical architecture of the distributed RAN 200 may be used to implement a hybrid operation mode for V2X communications.

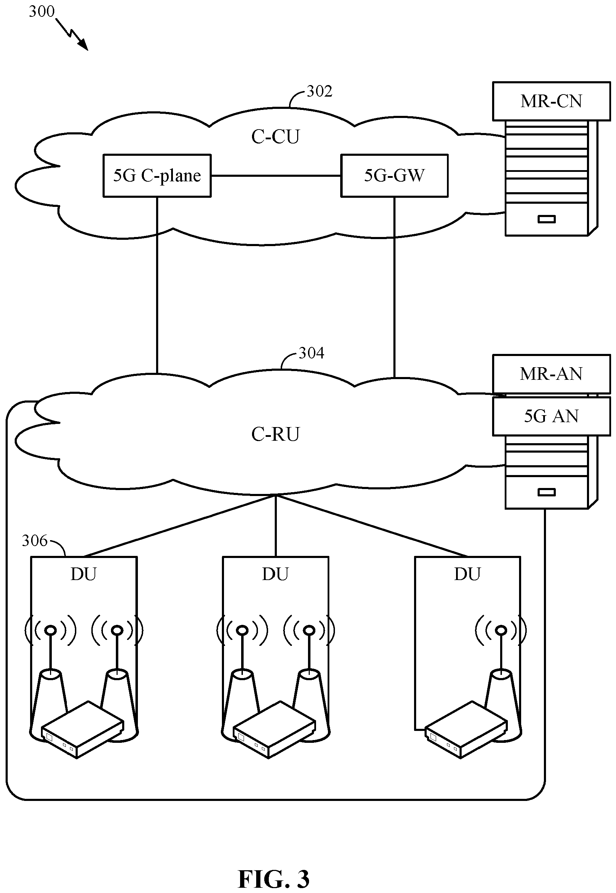

**FIG. 3** illustrates an example physical architecture of a distributed RAN 300 in accordance with aspects of the present disclosure. A centralized core network unit (C-CU) 302 may host core network functions. The C-CU 302 may be centrally deployed. C-CU 302 functionality may be offloaded (e.g., to advanced wireless services (AWSs)), in an effort to handle peak capacity.

A centralized RAN unit (C-RU) 304 may host one or more ANC functions. Optionally, the C-RU 304 may host core network functions locally. The C-RU 304 may have distributed deployment. The C-RU 304 may be closer to the network edge.

A DU 306 may host one or more TRPs (e.g., edge nodes (ENs), edge units (EUs), radio heads (RHs), smart radio heads (SRHs), or the like). The DU 306 may be located at edges of the network with RF functionality. The physical architecture of the distributed RAN 300 may be used to implement a hybrid operation mode for V2X communications.

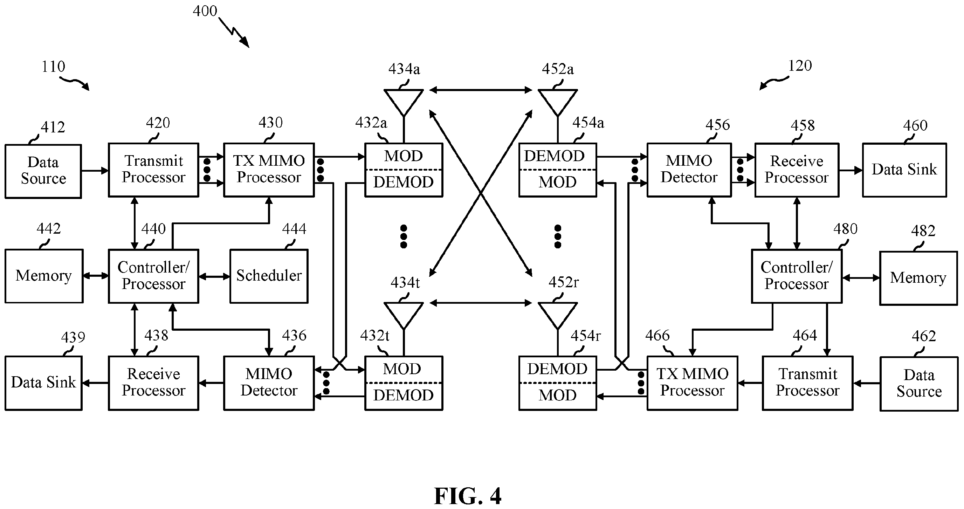

**FIG. 4** illustrates example components of a base station 110 and a UE 120 (e.g., as illustrated in FIG. 1) in a wireless communications system 400 in accordance with certain aspects of the present disclosure. As described herein, the base station 110 may include one or more TRPs. One or more components of the base station 110 and UE 120 may be used to practice aspects of the present disclosure. For example, antennas 452, processors 466, 458, 464, and/or controller/processor 480 of the UE 120 and/or antennas 434, processors 430, 420, 438, and/or controller/processor 440 of the base station 110 may be used to perform the operations described herein.

FIG. 4 shows a block diagram of a design of a base station 110 and a UE 120, which may be one of the base stations and one of the UEs described with reference to FIG. 1. For a restricted association scenario, the base station 110 may be the macro base station 110c in FIG. 1, and the UE 120 may be the UE 120y. The base station 110 may also be a base station of some other type. The base station 110 may be equipped with antennas 434a through 434t, and the UE 120 may be equipped with antennas 452a through 452r.

At the base station 110, a transmit processor 420 may receive data from a data source 412 and control information from a controller/processor 440. The control information may be for the Physical Broadcast Channel (PBCH), Physical Control Format Indicator Channel (PCFICH), Physical Hybrid Automatic repeat request (ARQ) Indicator Channel (PHICH), Physical Downlink Control Channel (PDCCH), etc. The data may be for the Physical Downlink Shared Channel (PDSCH), etc. The transmit processor 420 may process (e.g., encode and symbol map) the data and control information to obtain data symbols and control symbols, respectively. The processor 420 may also generate reference symbols, e.g., for the primary synchronization signal (PSS), secondary synchronization signal (SSS), cell-specific reference signal, etc. A transmit (TX) MIMO processor 430 may perform spatial processing (e.g., precoding) on the data symbols, the control symbols, and/or the reference symbols, if applicable, and may provide output symbol streams to the modulators 432a through 432t. For example, the TX MIMO processor 430 may perform certain aspects described herein for reference signal (RS) multiplexing. Each modulator 432 may process a respective output symbol stream (e.g., for OFDM, etc.) to obtain an output sample stream. Each modulator 432 may further process (e.g., convert to analog, amplify, filter, and upconvert) the output sample stream to obtain a DL signal. DL signals from modulators 432a through 432t may be transmitted via the antennas 434a through 434t, respectively.

At the UE 120, the antennas 452a through 452r may receive the DL signals from the base station 110 and may provide received signals to the demodulators 454a through 454r, respectively. Each demodulator 454 may condition (e.g., filter, amplify, downconvert, and digitize) a respective received signal to obtain input samples. Each demodulator 454 may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. For example, MIMO detector 456 may provide detected RS transmitted using techniques described herein. A receive processor 458 may process (e.g., demodulate, deinterleave, and decode) the detected symbols, provide decoded data for the UE 120 to a data sink 460, and provide decoded control information to a controller/processor 480. According to one or more cases, coordinated multi-point (CoMP) aspects can include providing the antennas, as well as some Tx/receive (Rx) functionalities, such that they reside in DUs. For example, some Tx/Rx processing may be done in the CU, while other processing can be done at the DUs. In accordance with one or more aspects as shown in the diagram, the base station MOD/DEMODs 432 may be in the DUs.

On the UL, at the UE 120, a transmit processor 464 may receive and process data (e.g., for the Physical Uplink Shared Channel (PUSCH)) from a data source 462 and control information (e.g., for the Physical Uplink Control Channel (PUCCH)) from the controller/processor 480. The transmit processor 464 may also generate reference symbols for a reference signal. The symbols from the transmit processor 464 may be precoded by a TX MIMO processor 466 if applicable, further processed by the demodulators 454a through 454r (e.g., for SC-FDM, etc.), and transmitted to the base station 110. At the base station 110, the UL signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct the operation at the base station 110 and the UE 120, respectively. The processor 440 and/or other processors and modules at the base station 110 may perform or direct the processes for the techniques described herein. The processor 480 and/or other processors and modules at the UE 120 may also perform or direct processes for the techniques described herein. The memories 442 and 482 may store data and program codes for the base station 110 and the UE 120, respectively. A scheduler 444 may schedule UEs for data transmission on the DL and/or UL.

The wireless communications system 400 may support a hybrid operation mode for V2X communications. In the hybrid operation mode, a UE 120 may receive (e.g., via one or more antennas 452 from a base station 110), an indication that the UE 120 belongs to at least one group of UEs for group-level resource allocation. The UE 120 may additionally receive an allocation of resources (e.g., a pool of resources) assigned to the group of UEs. The UE 120 may reserve a subset of resources from this pool of resources for communication. For example, the UE 120 may perform a sensing procedure (e.g., an LBT procedure) or other contention-based process to gain access to the subset of resources and may transmit, using transmit processor 464, TX MIMO processor 466, modulator 454, and/or antenna 452, signals to another UE 120 (e.g., in the group of UEs) or the base station 110.

**FIG. 5A** is a diagram 500A illustrating an example of a DL-centric subframe according to some aspects of the present disclosure. The DL-centric subframe 500A may include a control portion 502A. The control portion 502A may exist in the initial or beginning portion of the DL-centric subframe 500A. The control portion 502A may include various scheduling information and/or control information corresponding to various portions of the DL-centric subframe 500A. In some configurations, the control portion 502A may be a PDCCH, as indicated in FIG. 5A.

The DL-centric subframe 500A may also include a DL data portion 504A. The DL data portion 504A may sometimes be referred to as the payload of the DL-centric subframe 500A. The DL data portion 504A may include the communication resources utilized to communicate DL data from a scheduling entity 202 (e.g., eNB, base station, Node B, 5G NB, TRP, gNB, etc.) to a subordinate entity, e.g., a UE 120. In some configurations, the DL data portion 504A may be a PDSCH.

The DL-centric subframe 500A may also include a common UL portion 506A. The common UL portion 506A may sometimes be referred to as an UL burst, a common UL burst, and/or various other suitable terms. The common UL portion 506A may include feedback information corresponding to various other portions of the DL-centric subframe 500A. For example, the common UL portion 506 may include feedback information corresponding to the control portion 502A. Non-limiting examples of feedback information may include an acknowledgment (ACK) signal, a negative acknowledgment (NACK) signal, a hybrid automatic repeat request (HARQ) indicator, and/or various other types information. The common UL portion 506A may include additional or alternative information, such as information pertaining to random access channel (RACH) procedures, scheduling requests (SRs), sounding reference signals (SRS), and various other suitable types of information.

As illustrated in FIG. 5A, the end of the DL data portion 504A may be separated in time from the beginning of the common UL portion 506A. This time separation may sometimes be referred to as a gap, a guard period (GP), a guard interval, and/or various other suitable terms. This separation provides time for the switchover from DL communication (e.g., reception operation by the subordinate entity, e.g., UE 120) to UL communication (e.g., transmission by the subordinate entity, e.g., UE 120). One of ordinary skill in the art will understand, however, that the foregoing is merely one aspect of a DL-centric subframe 500A and alternative structures having similar features may exist without necessarily deviating from the aspects described herein.

The DL-centric subframe may support implementation of a hybrid operation mode for V2X communications (e.g., in an NR system). In some cases, a base station may transmit an indication of a UE group and a pool of resources for the UE group in a downlink transmission. For example, the indication of the UE group, the group-based resource allocation, or both may be transmitted in the control portion 502A. Additionally, a DL-centric subframe structure may be used for sidelink communications between UEs (e.g., UEs within the same UE group).

**FIG. 5B** is a diagram 500B illustrating an example of an UL-centric subframe according to some aspects of the present disclosure. The UL-centric subframe 500B may include a control portion 502B. The control portion 502B may exist in the initial or beginning portion of the UL-centric subframe 500B. The control portion 502B in FIG. 5B may be similar to the control portion 502A described herein with reference to FIG. 5A. The UL-centric subframe 500B may also include an UL data portion 504B. The UL data portion 504B may sometimes be referred to as the payload of the UL-centric subframe 500B. The UL portion may refer to the communication resources utilized to communicate UL data from the subordinate entity (e.g., a UE 120) to the scheduling entity 202 (e.g., a base station 110). In some configurations, the control portion 502B may be a PUSCH. As illustrated in FIG. 5B, the end of the control portion 502B may be separated in time from the beginning of the UL data portion 504B. This time separation may sometimes be referred to as a gap, GP, guard interval, and/or various other suitable terms. This separation provides time for the switchover from DL communication (e.g., reception operation by the scheduling entity 202) to UL communication (e.g., transmission by the scheduling entity 202).

The UL-centric subframe 500B may also include a common UL portion 506B. The common UL portion 506B in FIG. 5B may be similar to the common UL portion 506A described herein with reference to FIG. 5A. The common UL portion 506B may additionally or alternatively include information pertaining to channel quality indicators (CQIs), SRSs, and various other types of information. One of ordinary skill in the art will understand that the foregoing is merely one aspect of an UL-centric subframe 500B and alternative structures having similar features may exist without necessarily deviating from the aspects described herein.

As described herein, an UL-centric subframe 500B may be used for transmitting UL data from one or more mobile stations to a base station, and a DL centric subframe may be used for transmitting DL data from the base station to the one or more mobile stations. In one aspect, a frame may include both UL-centric subframes 500B and DL-centric subframes 500A. In this aspect, the ratio of UL-centric subframes 500B to DL-centric subframes 500A in a frame may be dynamically adjusted based on the amount of UL data and the amount of DL data to be transmitted. For example, if there is more UL data, then the ratio of UL-centric subframes 500B to DL-centric subframes 500A may be increased. Conversely, if there is more DL data, then the ratio of UL-centric subframes 500A to DL-centric subframes 500B may be decreased.

The UL-centric subframe may support implementation of the hybrid operation mode for V2X communications. In some cases, an UL-centric subframe structure may be used for sidelink communications between UEs (e.g., UEs within the same UE group). In other cases, an UL-centric subframe structure may be used by a UE to transmit one or more reports to a base station.

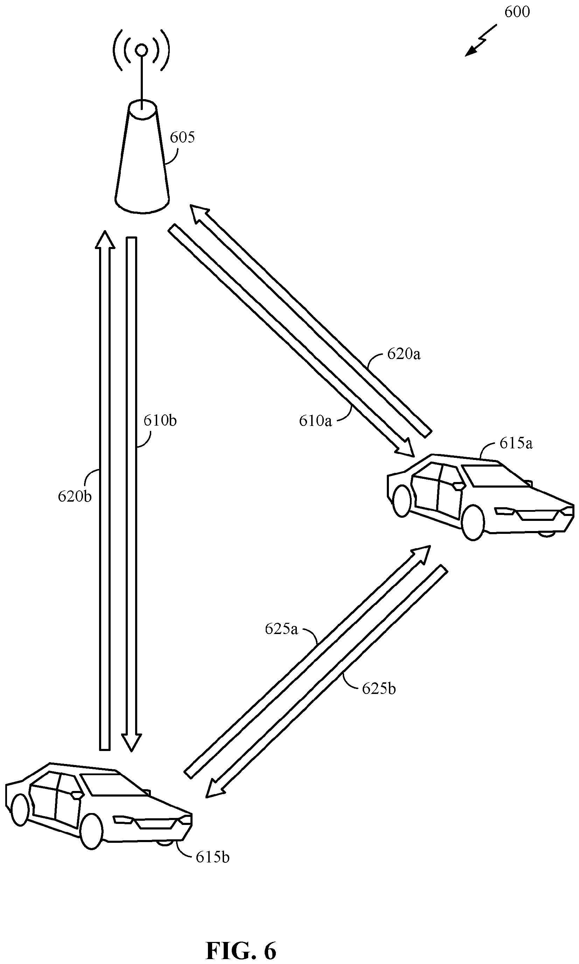

**FIG. 6** illustrates a wireless communications system 600 in accordance with aspects of the present disclosure. The wireless communications system 600 may include communications between a base station 605 (e.g., an eNB, gNB, etc.) and vehicles 615a and 615b. The base station 605 and vehicles 615a and 615b may be examples of a base station 110 and UEs 120 as described with reference to FIGs. 1 through 5. Aspects of FIG. 6 may be related to a hybrid operation mode for V2X communications (e.g., an enhanced V2X (EV2X) hybrid operation mode for NR PC5 V2X).

In V2X communications, there may be different modes of operation. V2X communication systems may involve communication between vehicles. Data packets may be sent directly between vehicles without going through the base station 605 (e.g., without going through the network, an eNB, a gNB, etc.). For example, vehicle 615a and 615b may communicate via sidelink communication channels 625a and 625b. In some cases, these sidelink communication channels may be referred to as PC5 channels or interfaces. The V2X system may also support communications between the base station 605 and vehicle 615a on an uplink channel 620a and a downlink channel 610a. Additionally, the V2X system may support communications between the base station 605 and vehicle 615b on an uplink channel 620b and a downlink channel 610b.

In some cases, V2X communications may support multiple operational modes. A first V2X operation mode (e.g., "Mode 3") is an example of a network scheduled resource allocation operation mode. Mode 3 is a centralized mode (e.g., base station-based) in which the network may schedule resources for a UE to use for communication of packet data. In one aspect, the scheduling of the traffic may be semi-persistent. For Mode 3, network infrastructure may not be involved in data transmissions (e.g., vehicles 615a and 615b may perform the data transmissions on sidelink communication channels 625a, 625b, or both). Although the base station 605 may not transmit data traffic in mode 3, it may control scheduling of resources. In some cases, a UE may need to be RRC_CONNECTED to the network in order to transmit data. The LTE (e.g., vehicle 615a) may request transmission resources from the base station 605. The base station 605 may schedule transmission resources for the UE (e.g., vehicle 615a) to use for transmission of sidelink control information and data. Sidelink semi-persistent scheduling (SPS) may be supported for scheduling resource allocations. Based on the network-based scheduling mode, better resource efficiency may be achieved as compared to contention-based scheduling modes, as potential resource collisions may be avoided. Accordingly, in Mode 3, the base station 605 may transmit control signals to UEs (e.g., vehicles 615a and 615b) to scheduled data transmissions, even though the base station 605 does not transmit or receive data in Mode 3.

A second V2X operation mode (e.g., "Mode 4") is an example of a UE-based resource selection mode where a UE (e.g., a vehicle) may autonomously select the resources for transmission. For Mode 4, the UE (e.g., vehicle 615a) may select which resources to use for a transmission from within an allocated resource pool. The selection may be random (e.g., pseudorandom) or based on an algorithm (e.g., stored in a memory). Mode 4 may be known as an infrastructure-less mode of cellular V2X (C-V2X) operation. The UE (e.g., vehicle 615a) may identify a pool of resources preconfigured at the UE or associated with the base station 605 and may select resources from the resource pool. The UE (e.g., vehicle 615a) may perform transport format selection to transmit sidelink control information, data, or both over a sidelink communication channel (e.g., sidelink communication channel 625b). In some cases, different geographic zones may map to different resource pools (e.g., for a single cell or across multiple cells). If mapping between the zones and the V2X sidelink transmission resource pools is configured, the UE may identify a V2X sidelink resource pool based on the zone the UE is currently located in. The UE may perform sensing for (re)selection of sidelink resources. Based on sensing results, the UE may (re)select specific sidelink resources and reserve multiple sidelink resources. In some cases, multiple parallel independent resource reservation processes may be performed by the UE. In one aspect, up to two parallel independent resource reservation processes may be performed by the UE. Additionally or alternatively, the UE may support a single resource selection for its V2X sidelink transmission. In some cases, Mode 4 may be referred to as UE autonomous resource selection mode.

With the C-V2X mode(s) of operation, there may be two sidelink (or side communication) channels established between UEs (e.g., between vehicle 615a and vehicle 615b). One of these sidelink channels is the physical sidelink shared channel (PSSCH) which is used to send and receive data and the other is the physical sidelink control channel (PSCCH) which is used to send and receive control signaling. A side channel (e.g., V2X communication channel or cellular communications) may be used by a UE to communicate the UE's location and the parameter pattern (or codeword) being sent (or broadcast) to other UEs in the system. Vehicles may exchange their information by using one-hop transmissions in sidelink channels based V2.X, such as in sidelink communication channels 625a and 625b. The transmitter of one vehicle may send information directly to receivers in other vehicles about traffic, status, location, etc.

Vehicle-to-infrastructure communications may allow roadside units (RSUs) (e.g., traffic signals, tolls, etc.) to monitor traffic. RSUs may be examples of radio base stations installed along the side of a road or at intersections. For example, they may be on traffic light poles, lamp poles, and electronic toll collectors.

In NR V2X systems, there are many more types of traffic being transmitted over the PC5 interface (e.g., sidelink communication channels) than in LTE V2X systems. PC5 may be an interface (e.g., used by the 3rd Generation Partnership (3GPP)) for use in facilitating direct communication for end to end V2X communication. Besides periodic traffic (e.g., basic safety messages (BSM), cooperative awareness messages (CAM), etc.), which in some cases may be transmitted periodically every 100 ms, there may be additional event driven traffic (or bursty traffic) based on cooperative driving, platooning, sensor sharing, etc. in NR V2X systems. Event driven traffic may occur at some unknown time due to an emergency, or a trigger for one vehicle to share information with another vehicle, or an application using a set of resources, or some combination of these or other traffic triggers. Besides broadcast traffic, there may also be more unicast/groupcast traffic in NR V2X systems. Unicast traffic may be sent to a single vehicle, while groupcast traffic may be sent to multiple vehicles in a group of vehicles.

To support this significant traffic overhead in some V2X systems (e.g., based on autonomous driving applications in NR systems), vehicles may implement one or more techniques to handle high throughput and low delay communications for some traffic types. For example, due to limited radio resources and the high level of quality of service (QoS) requirements, vehicles may reuse or spatially share radio resources. In Mode 3, base stations may manage resources at the cell level, and all the UEs within the cell may share the same resource pool. This may result in significant inefficiencies in the signaling overhead to handle the high throughput of PC5 traffic. In Mode 4, each UE may handle the individual assignment of resources for itself, winch may result in collisions due to random resource selection without coordination amongst the UEs selecting the resources.

To manage the high throughput and low delay of V2X communications (e.g., in V2X NR systems), the wireless communications system 600 may implement a hybrid mode of operation (e.g., "Mode 3.5") for V2X communications. This hybrid mode of operations may support a higher efficiency of spectrum use. In the hybrid mode of operations, a base station 605 may perform a coarse allocation of resources at a group-level. For example, the base station 605 may assign vehicles 615a and 615b to a first group of UEs and may assign other vehicles (not pictured) to the same group or other groups. The base station 605 may assign a group-specific pool of resources to each group of UEs. Each UE may perform resource contention within its assigned group to gain access to the spectrum and transmit information (e.g., over a sidelink communication channel). For example, the base station 605 may transmit the indication of the group and group-specific resources to vehicles 615a and 615b on the downlink communication channels 610a and 610b, respectively. Vehicles 615a and 615b may contend for subsets of resources in the pool of group-specific resources. When vehicle 615a gains access to the resources, vehicle 615 may transmit information over the PC5 interface (e.g., on the sidelink communication channel 625b to vehicle 615b).

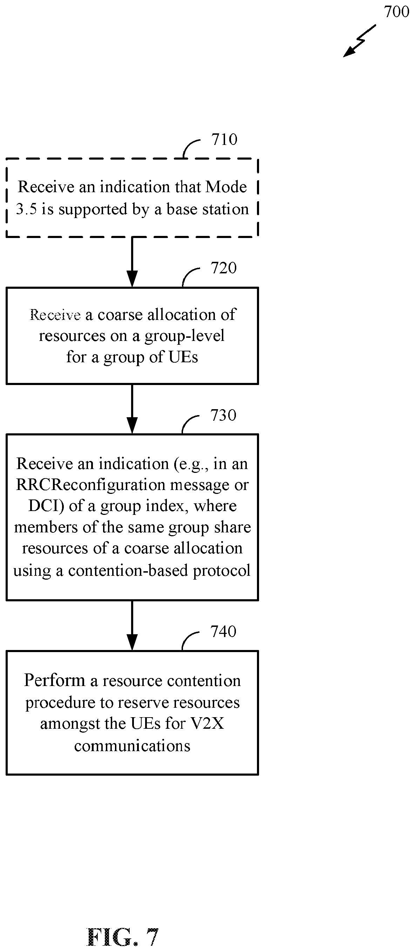

**FIG. 7** illustrates a flowchart 700 including a method for a hybrid operation mode for V2X communications. The flowchart 700 may illustrate a process performed by a UE (e.g., a vehicle) for V2X communications, where the UE may be an example of a UE or vehicles as described with reference to FIGs. 1 through 6.

In some cases, the UE, a base station, or both may determine if the system supports the hybrid operation mode (e.g., Mode 3.5). For example, a base station in an NR system may determine to support the hybrid operation mode for the UEs (e.g., vehicles) in the system. At 710, if the base station (e.g., an eNB/gNB) supports Mode 3.5, the base station may indicate as much by transmitting a system information block (SIB) message or dedicated RRC message to a UE. The UE may receive the indication that Mode 3.5 is supported and initiated by the base station.

At 720, the base station may perform a coarse allocation of resources (e.g., using one or more procedures similar to Mode 3 procedures) on a group level rather than on a UE level. For example, the base station may assign a pool of resources to a group of UEs. To efficiently support a large number of UEs in the system, the base station may assign multiple pools of resources to respective groups of UEs. The pools of resources for different UE groups may be non-overlapping in time, frequency, or both. The UE may receive the coarse allocation of resources for one or more groups of UEs.

At 730, the base station may assign the UE to a group of UEs. For example, as a response to a UE reporting the location of the UE, the base station may indicate a specific group index to the UE. In some cases, the base station may use an RRCReconfiguration message, an RRCConnectionReconfiguration message, a special DCI format in PDCCH or EPDCCH, or some combination of these or other signals to indicate that the UE belongs to a particular group of UEs (e.g., based on the group index). The UE may receive the indication of the group index and may determine the indicated group of UEs and corresponding pool of resources. This pool of resources may be shared by the members (e.g., UEs) in the same group of UEs using a contention-based protocol.

For example, at 740, the UEs in the assigned group may perform resource contention procedures (e.g., using one or more procedures similar to Mode 4 procedures) to allocate the resources from the coarsely allocated resources pool amongst the UEs. Each UE that has information to transmit using the resources may perform a contention-based procedure (e.g., an LBT procedure) to reserve a subset of the pool of resources for its own transmission. In this way, the UE may reserve specific resources of the network-allocated group-level resources for communicating with one or more other UEs. These other UEs may belong to the same group of UEs or different groups, and the UEs may communicate with one another using sidelink communication channels.

Implementing this hybrid operation mode to allocate resources for V2X communications results in a number of advantages (e.g., as compared to operating in Mode 3 or Mode 4 for V2X communications). The advantages include allowing the system to not completely rely on the network (e.g., base station, eNB, gNB, etc.) to do precise allocation of resources to each UE. In some modes of resource allocation, a base station allocates resources to individual UEs every frame or every SPS period. This results in a large amount of individual signaling between the base station and the UEs. Thus, using Mode 3.5 may reduce the amount of excessive individual signaling and may avoid overly conservative allocations. Additionally or alternatively, the hybrid operation mode may prevent potentially chaotic contention in some resource allocation modes (e.g., such as Mode 4) where all the UEs may try to gain access to a single pool of resources. In the hybrid operation mode, the initial coarse allocation allocating resources per group of UEs may limit such chaotic contention between different UEs (e.g., based on different UEs in different groups contending for different sets of resources).

Mode 3.5 may be implemented in configurations such as the one described in FIG. 6. In one aspect, a typical SPS period may last 50, 100, or 200 ms. In Mode 3.5, because the base station may not allocate resources per individual UE, SPS periods may be longer for allocating resources to groups of UEs. This may support efficient usage of the resources in the hybrid mode because when allocating to individual UEs, flow of traffic may change quickly due to UE and application behaviors, but with a group of UEs, overall traffic may be more stable or relatively consistent (e.g., within a certain threshold traffic level). Accordingly, the SPS period may be set longer for a group of UEs than for individual UEs while still maintaining efficient resource allocation.

Coarse allocation of resources to a group of UEs may involve segmenting a total set of resources according to the location of the group of UEs and the zones the UEs are in such that resources may be reused in different zones. In one aspect, it is preferable that resources to be reused do not overlap in proximity so that there is low or no contention for resources between two different vehicles in different groups. For example, if the base station organizes its coverage area into multiple zones, the base station may reuse a pool of resources in multiple zones. However, the resources may be coarsely allocated to non-contiguous zones or to zones that are a threshold distance apart. In this way, different UEs in different zones may contend for and reserve the same resources for transmission if the UEs are in zones far enough apart that the corresponding sidelink transmissions do not collide (e.g., interfere with each other above a threshold level of interference).

In one aspect, resource contention to allocate resources from a resources pool amongst the UEs involves energy sensing where the energy in a spectrum is sensed and ranked from the highest amount to the lowest amount. The part of the shared spectrum with the least energy is considered to be the least crowded. Thus, a UE may select this part of the spectrum because it appears least used. In one aspect, the energy sensing may be repeated every frame or every SPS period.

In one aspect, Mode 3.5 is a hybrid of network scheduled resource allocation and UE autonomous resource selection operation. The hybrid Mode 3.5 may support a number of features or aspects. In a first aspect, the hybrid operation mode may enable the spatial reuse of radio resources. For example, sidelink grants generated by the base station may be spatially reused or shared by multiple UEs. In some cases, multiple UEs may use the same sidelink grant (e.g., in different zones). Additionally or alternatively, the hybrid Mode 3.5 may enable shared resource allocation for a set of UEs. The UEs may determine how the resource may be used amongst the UEs. In some cases, the resource allocation is contention-based. In other cases, the UEs may divide the resources equally amongst the UEs. In still other cases, the UEs may use unicast or groupcast communications to divide the resources amongst the UEs (e.g. assigning the sequence or share of resources for each UE). The sidelink grants may include resource blocks. In the hybrid mode, the actual allocation of the sidelink grants may be performed by the UEs, not by the base station.

In a second aspect of the hybrid operation mode, a SIB may be used to indicate Mode 3.5 support by a base station (e.g., see 710 of FIG. 7), where the base station may broadcast the SIB to the UEs. Additionally or alternatively, the base station may signal the support of Mode 3.5 to a UE via dedicated RRC signaling (e.g. when the UE is in RRC_CONNECTED mode).

In V2X communications systems, a UE may track its location. Thus, the UE, in the current invention, reports its location. A base station receives and uses this location information to assign the sidelink grants so that the UEs may spatially share the grant. If UEs are spaced far enough apart, they may not create interference with each other even if they share the same resource block of a sidelink grant. In some cases, the base station may assign the same sidelink grant but may use individual DCIs to inform individual UEs of the sidelink grants. The base station may additionally indicate that the sidelink grant provided resources are shared among a group of UEs. A DCI may be used to signal an allocation of resources to each UE.

In a third aspect of the hybrid operation mode, covered by the the current invention, as a response to a UE reporting its location, the base station indicates to the UE (e.g., using an RRCReconfiguration or RRCConnectionReconfiguration message containing a group index) that the UE belongs to a particular contend group. The base station may additionally or alternatively send a DCI message containing a group index to indicate to the UE that it belongs to the contend group. The RRCReconfiguration or RRCConnectionReconfiguration message may be a command used to provide a configuration for the UE to provide PC5 communications. This configuration may include establishing, releasing, and/or modifying radio bearers, performing handover, setting up, modifying, and releasing measurements, adding, modifying, and releasing SCells, or any combination of these configurations.

When the DCI contains the contend group index, the UEs (e.g., assigned with this group index in the RRC signaling) may contend for the shared resources (e.g., by using a contention-based protocol such as the energy sensing protocol discussed herein to contend for the shared spectrum). In some cases, UEs in the same contend group may contend for and reserve the same subset of resources, for example, due to the base station assigning UEs from different platoons, different zones, or both into the same contend group. In some cases, these UEs may contend for a channel in the shared spectrum using the energy sensing protocol.

In a fourth aspect of the hybrid operation mode, the DCI used to inform individual UEs of the sidelink grants may have a different DCI format than traditional DCI formats. For example, it may be different from the DCI format for Mode 3 operation by using a different number of bits in the DCI payload. Additional information about the group may be represented with the additional elements in the new DCI format.

In a fifth aspect, a base station may schedule a set of resources to be used by multiple V2X UEs such that the UEs may spatially reuse the resources. In some cases, the base station may change the resources slot by slot. This may allow the base station-for example, even if the base station is unable to do instant scheduling per frame for all V2X UEs-to pre-allocate resources for the groups of UEs to select from. These pre-allocated resources may span a larger time frame than Mode 3 resource allocations, supporting a UE identifying and selecting resources at a later time without the UE requesting a sidelink allocation again (e.g., by selecting resources later in the larger time frame). As discussed herein, the base station may indicate to the UE (e.g., in the RRCReconfiguration or RRCConnectionReconfiguration message) that the UE belongs to a group index where members of the same group index may share resources using a contention-based protocol. When the base station transmits a DCI containing this group index to the UEs in the group, the UEs in this group may contend for the shared resources (e.g., by using a contention-based protocol such as an energy sensing protocol). In some cases, within this group, the UEs may perform a resource based selection.

In some cases, the base station may assign a V2X group RNTI (VG-RNTI) to the UEs (e.g., rather than a group index), such that the UE may know that any resource assignment for this VG-RNTI is meant for sharing among the group of UEs for V2X communication. Furthermore, the assignment of such groups may be based on the applications running on the UE. For example, the UE may report the provider service identifier (PSID) and/or intelligent transport system (ITS) application identifiers (AIDs) of the active applications to the base station.

In some cases, how many and what kind of resources to use by the UEs may be requested from the base station by one UE or multiple UEs using one or more resource requests. In one operation mode, each UE may send a resource request (e.g., a status request containing a buffer status report (BSR)). In an alternative operation mode, one UE of the group may be selected as the representative to send the resources request. For example, this UE may be an example of a platoon lead and may identify the members of the platoon and the traffic to be transmitted for the platoon operation. In yet another alternative operation, the UEs may elect one UE to send the resource request (e.g., the UE with the lowest Layer 2 identifier (L2 ID)).

A UE may indicate that it uses normal resources, ultra-reliable low latency communication (URLLC) resources, or both in the resource request. URLLC may use different numerologies, types of transmissions, types of frame structures, etc. In one aspect, if a UE requests resources, the UE may indicate whether the resources are for normal transmission/reception supported by traditional frame structures, etc., or whether the resources are for URLLC. In a new DCI format, the base station may also indicate whether the resources are for all communications, normal only, URLLC only, or that the URLLC communications have a higher priority than normal transmissions/receptions. By allocating communications as URLLC or by URLLC having higher priority, the URLLC traffic may be sent without the UE sensing if the shared medium is being used by another device due to the urgency of the traffic, or the URLLC traffic may use a shorter back-off window value in accessing the resources for reduced latency.

If congestion in the shared medium is beyond a configured threshold, the congestion may be reported to the base station. For example, a UE may be configured to inform the base station when the energy sensing indicates a threshold level (e.g., 80%) of use of the granted resources, when collision in transmission is detected for a threshold amount (e.g., 10%) of the time, or both. The report of such congestion may also be based on the identification of the applications involved (e.g., based on the PSIDs/ITS-AIDs), which may indicate the application classes for the base station to perform per application resource management. To reduce congestion, the base station may reduce resource allocation to some applications. Different parameters may be used to report this congestion information. In some operation modes, the base station may not be aware of the PSID/ITS-AIDs (e.g., as these are application layer identifiers). In these modes, in the congestion reporting, PSID/ITS-AIDs may be mapped to one or more L2 IDs so the base station may process the information. For example, reporting of the congestion for a particular PSID may be done using a particular L2 ID (e.g., according to the configuration of the UE).

UEs may indicate information to a base station so that the base station identifies that this UE belongs to a group using some form of group ID. This group may be associated with an application or multiple applications. There may be different group IDs for different applications a UE is participating in (e.g., reflecting the PSID(s) used by the UE). Each group ID may be semi-static, such that the UE may use the resources associated with a specific group ID for that group communication and does not use these resources for other group communication. In some cases, there may be dynamic groups formed for certain groups of UEs or applications. Traffic for different groups may be queued separately so that traffic is kept separate.

In some cases, the UE may report to the base station whether a QoS is satisfactory or not. In one aspect, the QoS for different groups of UEs may be reported to the base station. Because of the allocation of resources at a group level, there may be a lot of contention for resources. The base station may be able to adjust resource allocation if QoS levels are not met. Additionally or alternatively, the base station may switch from Mode 3.5 to Mode 3 to better control resource usage, or switch to Mode 4 if there are few UEs in the region and a QoS level far exceeds a threshold.

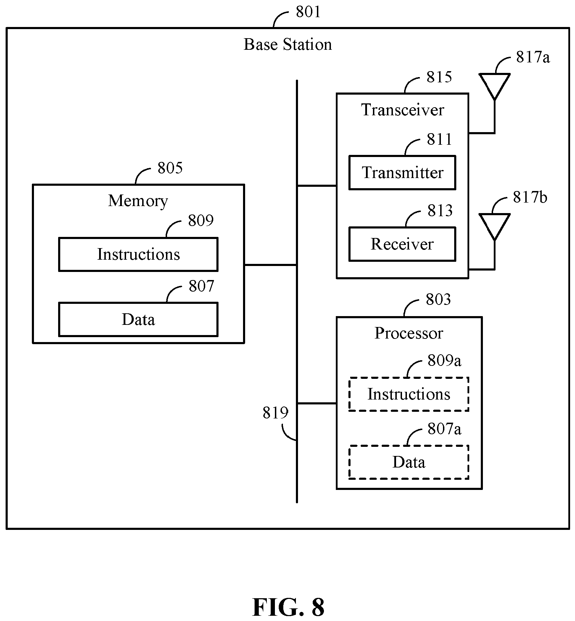

**FIG. 8** illustrates certain components that may be included within a base station 801 in accordance with aspects of the present disclosure. The base station 801 may be an access point, a NodeB, an evolved NodeB, etc. The base station 801 may include a processor 803. The processor 803 may be a general purpose single-chip or multi-chip microprocessor (e.g., an advanced reduced instruction set computer (RISC) machine (ARM)), a special purpose microprocessor (e.g., a digital signal processor (DSP)), a microcontroller, a programmable gate array, etc. The processor 803 may be referred to as a central processing unit (CPU). Although just a single processor 803 is shown in the base station 801 of FIG. 8, in an alternative configuration, a combination of processors (e.g., an ARM and DSP) may be used.

The base station 801 also includes memory 805. The memory 805 may be any electronic component capable of storing electronic information. The memory 805 may be embodied as random-access memory (RAM), read only memory (ROM), magnetic disk storage media, optical storage media, flash memory devices in RAM, on-board memory included with the processor, erasable programmable read-only memory (EPROM), electronically erasable programmable read-only memory (EEPROM), registers, and so forth, including combinations thereof.

Data 807 and instructions 809 may be stored in the memory 805. The instructions 809 may be executable by the processor 803 to implement the methods disclosed herein. Executing the instructions 809 may involve the use of the data 807 that is stored in the memory 805. When the processor 803 executes the instructions 809, various portions of the instructions 809a may be loaded onto the processor 803, and various pieces of data 807a may be loaded onto the processor 803.

The base station 801 may also include a transmitter 811 and a receiver 813 to allow transmission and reception of signals to and from the base station 801. The transmitter 811 and receiver 813 may be collectively referred to as a transceiver 815. Multiple antennas, such as antennas 817a and 817b, may be electrically coupled with the transceiver 815. The base station 801 may also include (not shown) multiple transmitters, multiple receivers, and/or multiple transceivers.

The various components of the base station 801 may be coupled together by one or more buses, which may include a power bus, a control signal bus, a status signal bus, a data bus, etc. For the sake of clarity, the various buses are illustrated in FIG. 8 as a bus system 819. Although FIG. 7 was discussed with reference to a UE, it should be understood that a base station, such as the base station 801, may perform the corresponding transmitting of a group identifier for the UE and a coarse resource allocation that are monitored for and received by the UE. Additionally, a base station such as base station 801 may receive some of the information indicated by the UE discussed in FIG. 7. The processes performed by the base station 801 may be implemented in hardware, software executed by a processor like the processor 803 described in FIG. 8, or some combination thereof.

The base station 801 may communicate with a UE operating according to a hybrid operation mode for V2X communications. The base station 801 may transmit an indication that the UE belongs to at least one group of UEs for group-level resource allocation and may transmit an allocation of resources including a pool of resources assigned to the at least one group of UEs. The UE may use these resources for contention-based access to transmit over a PC5 interface (e.g., a sidelink communication channel). In some cases, the base station 801 may transmit the group indication and group-specific resource pool indication based on identifying or selecting the hybrid operation mode. If the base station 801 operates according to a different V2X operation mode, the base station 801 may perform a different set of procedures.

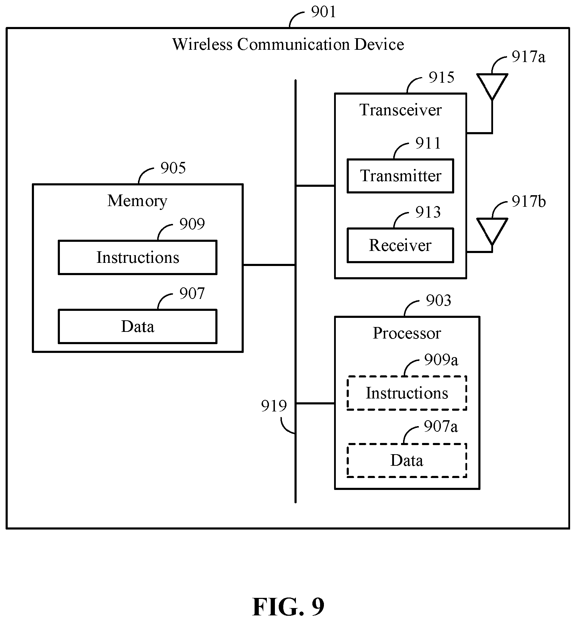

**FIG. 9** illustrates certain components that may be included within a wireless communication device 901 in accordance with aspects of the present disclosure. The wireless communication device 901 may be an access terminal, a mobile station, a UE, etc. The wireless communication device 901 includes a processor 903. The processor 903 may be a general-purpose single-chip or multi-chip microprocessor (e.g., an ARM), a special purpose microprocessor (e.g., a DSP), a microcontroller, a programmable gate array, etc. The processor 903 may be referred to as a CPU. Although just a single processor 903 is shown in the wireless communication device 901 of FIG. 9, in an alternative configuration, a combination of processors (e.g., an ARM and DSP) may be used.

The wireless communication device 901 also includes memory 905. The memory 905 may be any electronic component capable of storing electronic information. The memory 905 may be embodied as RAM, ROM, magnetic disk storage media, optical storage media, flash memory devices in RAM, on-board memory included with the processor, EPROM, EEPROM, registers, and so forth, including combinations thereof.

Data 907 and instructions 909 may be stored in the memory 905. The instructions 909 may be executable by the processor 903 to implement the methods disclosed herein. Executing the instructions 909 may involve the use of the data 907 that is stored in the memory 905. When the processor 903 executes the instructions 909, various portions of the instructions 909a may be loaded onto the processor 903, and various pieces of data 907a may be loaded onto the processor 903.

The wireless communication device 901 may also include a transmitter 911 and a receiver 913 to allow transmission and reception of signals to and from the wireless communication device 901. The transmitter 911 and receiver 913 may be collectively referred to as a transceiver 915. Multiple antennas, for example antennas 917a and 917b, may be electrically coupled with the transceiver 915. The wireless communication device 901 may also include (not shown) multiple transmitters, multiple receivers, and/or multiple transceivers.

The various components of the wireless communication device 901 may be coupled together by one or more buses, which may include a power bus, a control signal bus, a status signal bus, a data bus, etc. For the sake of clarity, the various buses are illustrated in FIG. 9 as a bus system 919. The wireless communication device 901 may perform one or more of the functions described with reference to FIG. 7. It should be noted that these methods describe possible implementations, and that the operations and the steps may be rearranged or otherwise modified such that other implementations are possible. In some cases, aspects from two or more of the methods may be combined. For example, aspects of each of the methods may include steps or aspects of the other methods, or other steps or techniques described herein. Thus, aspects of the disclosure may provide for receiving on transmit steps and transmitting on receive steps. The functions described herein in the flowcharts of FIG. 7 may be implemented in hardware, software executed by a processor like the processor 903 described in FIG. 9, or some combination thereof.

The wireless communication device 901 may include methods, systems, and devices for wireless communications as described herein. For example, the wireless communication device 901 may be an example of a UE that may receive, from a base station, an indication that the UE belongs to at least one group of UEs for group-level resource allocation, may receive, from the base station, an allocation of resources including a pool of resources assigned to the at least one group of UEs, and may reserve a subset of resources of the pool of resources for communication to at least one other UE (e.g., on a sidelink communication channel) of the at least one group of UEs.

The description herein is provided to enable a person skilled in the art to make or use the disclosure. Various modifications to the disclosure may be readily apparent to those skilled in the art.

The functions described herein may be implemented in hardware, software executed by a processor, firmware, or any combination thereof. If implemented in software executed by a processor, the functions may be stored on or transmitted over as one or more instructions or code on a computer-readable medium. Functions described herein may be implemented using software executed by a processor, hardware, firmware, hardwiring, or combinations of any of these. Features implementing functions may also be physically located at various positions, including being distributed such that portions of functions are implemented at different physical (PHY) locations. Also, as used herein, including in the claims, "or" as used in a list of items (for example, a list of items prefaced by a phrase such as "at least one of" or "one or more") indicates an inclusive list such that, for example, a list of at least one of A, B, or C means A or B or C or AB or AC or BC or ABC (i.e., A and B and C).

Computer-readable media includes both non-transitory computer storage media and communication media including any medium that facilitates transfer of a computer program from one place to another. A non-transitory storage medium may be any available medium that may be accessed by a general purpose or special purpose computer. By way of example, and not limitation, non-transitory computer-readable media may include RAM, ROM, EEPROM, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Bluray disc where disks usually reproduce data magnetically, while discs reproduce data optically with lasers. Combinations of the above are also included within the scope of computer-readable media.

Techniques described herein may be used for various wireless communications systems such as code-division multiple access (CDMA), time-division multiple access (TDMA), frequency-division multiple access (FDMA), OFDMA, SC-FDMA, and other systems. The terms "system" and "network" are often used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases 0 and A are commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as (Global System for Mobile communications (GSM)). An OFDMA system may implement a radio technology such as Ultra Mobile Broadband (UMB), Evolved UTRA (E-UTRA), IEEE 802.11 (wireless fidelity (Wi-Fi)), IEEE 802.16 (WiMAX), IEEE 802.20, Flash-OFDM, etc. UTRA and E-UTRA are part of Universal Mobile Telecommunications system (Universal Mobile Telecommunications System (UMTS)). 3GPP LTE and LTE-advanced (LTE-A) are new releases of UMTS that use E-UTRA. UTRA, E-UTRA, UMTS, LTE, LTE-a, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. The description herein, however, describes an LTE system for purposes of example, and LTE terminology is used in much of the description above, although the techniques are applicable beyond LTE applications.

In LTE/LTE-A networks, including networks described herein, the term evolved node B (eNB) may be generally used to describe the base stations. The wireless communications system or systems described herein may include a heterogeneous LTE/LTE-A network in which different types of eNBs provide coverage for various geographical regions. For example, each eNB or base station may provide communication coverage for a macro cell, a small cell, or other types of cell. The term "cell" is a 3GPP term that may be used to describe a base station, a carrier or component carrier (CC) associated with a base station, or a coverage area (e.g., sector, etc.) of a carrier or base station, depending on context.

Base stations may include or may be referred to by those skilled in the art as a base transceiver station, a radio base station, an access point (AP), a radio transceiver, a NodeB, eNB, Home NodeB, a Home eNodeB, or some other suitable terminology. The geographic coverage area for a base station may be divided into sectors or zones making up a portion of the coverage area. The wireless communications system or systems described herein may include base stations of different types (e.g., macro or small cell base stations). The UEs described herein may be able to communicate with various types of base stations and network equipment including macro eNBs, small cell eNBs, relay base stations, and the like. There may be overlapping geographic coverage areas for different technologies. In some cases, different coverage areas may be associated with different communication technologies. In some cases, the coverage area for one communication technology may overlap with the coverage area associated with another technology. Different technologies may be associated with the same base station or with different base stations.

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The DL transmissions described herein may also be called forward link transmissions while the UL transmissions may also be called reverse link transmissions. Each communication link described herein including, for example, wireless network 100 of FIG. 1 may include one or more carriers, where each carrier may be a signal made up of multiple subcarriers (e.g., waveform signals of different frequencies). Each modulated signal may be sent on a different subcarrier and may carry control information (e.g., reference signals, control channels, etc.), overhead information, user data, etc. The communication links described herein may transmit bidirectional communications using frequency division duplex (FDD) (e.g., using paired spectrum resources) or time division duplex (TDD) operation (e.g., using unpaired spectrum resources). Frame structures may be defined for FDD (e.g., frame structure type 1) and TDD (e.g., frame structure type 2).

Aspects of the disclosure may provide for receiving on transmit and transmitting on receive. It should be noted that these methods describe possible implementations, and that the operations and the steps may be rearranged or otherwise modified such that other implementations are possible. In some cases, aspects from two or more of the methods may be combined.

The various illustrative blocks and modules described in connection with the disclosure herein may be implemented or performed with a general-purpose processor, a DSP, an application-specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration). Thus, the functions described herein may be performed by one or more other processing units (or cores), on at least one integrated circuit (IC). In various examples, different types of ICs may be used (e.g., Structured/Platform ASICs, an FPGA, or another semi-custom IC), which may be programmed in any manner known in the art. The functions of each unit may also be implemented, in whole or in part, with instructions embodied in a memory, formatted to be executed by one or more general or application-specific processors.

In the appended figures, similar components or features may have the same reference label. Further, various components of the same type may be distinguished by following the reference label by a second label that distinguishes among the similar components. If just the first reference label is used in the specification, the description is applicable to any one of the similar components having the same first reference label irrespective of the second reference label.

## Claims

1. A method for wireless communication implemented by a user equipment, UE, the method comprising:
transmitting, to a base station, a report indicating a location of the UE;
receiving (710), from the base station, an indication that the UE belongs to at least one group of UEs for a group-level resource allocation, wherein the group-level resource allocation is based at least in part on the location of the UE;
receiving (720), from the base station, an allocation of resources comprising a pool of resources assigned to the at least one group of UEs; and
reserving (730) a subset of resources of the pool of resources for communication to at least one other UE.

2. The method of claim 1, wherein the reserving the subset of resources of the pool of resources for communication comprises:
performing a sensing procedure to reserve the subset of resources of the pool of resources for communication.

3. The method of claim 2, wherein the sensing procedure comprises a listen-before-talk, LBT, procedure.

4. The method of claim 1, wherein the receiving the allocation of resources comprises:
receiving a segment of a total set of resources according to a location of the at least one group of UEs and a zone that the at least one group of UEs is within, wherein the segment of the total set of resources is reused in at least one other zone.

5. The method of claim 1, wherein the receiving the allocation of resources comprises:
receiving, in response to the report, one or more sidelink grants assigned by the base station to the at least one group of UEs for spatial sharing of the one or more sidelink grants.

6. The method of claim 1, wherein the reserving the subset of resources of the pool of resources for communication comprises:
sensing energy in a shared radio frequency spectrum;
ranking the energy from a highest amount to a lowest amount for a plurality of portions of the shared radio frequency spectrum; and
selecting a portion of the shared radio frequency spectrum with the lowest amount of energy based at least in part on the ranking.

7. The method of claim 1, wherein the indication that the UE belongs to the at least one group of UEs comprises a radio resource control reconfiguration, RRCReconfiguration, message comprising a group index indicating that the UE belongs to the at least one group of UEs; or wherein the indication that the UE belongs to the at least one group of UEs comprises downlink control information, DCI, comprising a group index indicating that the UE belongs to the at least one group of UEs.

8. The method of claim 1, further comprising:
receiving a group radio network temporary identifier, RNTI; and
determining that the pool of resources is assigned to the at least one group of UEs based at least in part on the group RNTI.

9. The method of claim 1, further comprising:
reporting congestion for at least one application class.

10. The method of claim 1, further comprising:
determining that the base station supports a hybrid mode of cellular vehicle-to-everything, C-V2X, operation, wherein the receiving the indication that the UE belongs to the at least one group of UEs is based at least in part on the base station supporting the hybrid mode of C-V2X operation.

11. The method of claim 10, further comprising:
switching from the hybrid mode of C-V2X operation to a network scheduled resource allocation mode of C-V2X operation; and
receiving, from the base station, a UE-specific allocation of resources for the UE.

12. The method of claim 10, further comprising:
switching from the hybrid mode of C-V2X operation to a UE autonomous resource selection mode of C-V2X operation if a quality of service level exceeds a threshold.

13. The method of claim 1, further comprising:
transmitting, to the base station, a request for resources for the UE or a plurality of UEs in the at least one group of UEs, wherein the receiving the allocation of resources is based at least in part on the request for resources, and wherein the request for resources comprises a request for normal resources, a request for ultra-reliable low-latency communication, URRLC, resources, or a combination thereof.

14. The method of claim 1, further comprising:
transmitting, to the at least one other UE, a signal in the reserved subset of resources of the pool of resources for communication.

15. An apparatus for wireless communication implemented by a user equipment, UE, the apparatus comprising:
means for transmitting, to a base station, a report indicating a location of the UE;
means for receiving, from the base station, an indication that the UE belongs to at least one group of UEs for group-level resource allocation, wherein the group-level resource allocation is based at least in part on the location of the UE;
means for receiving, from the base station, an allocation of resources comprising a pool of resources assigned to the at least one group of UEs; and
means for reserving a subset of resources of the pool of resources for communication to at least one other UE.

## Patentansprüche

1. Ein Verfahren für eine drahtlose Kommunikation, das durch ein Benutzergerät (User Equipment bzw. UE) implementiert wird, wobei das Verfahren aufweist:
Senden, an eine Basisstation, eines Berichts, der eine Position für das UE angibt,
Empfangen (710), von der Basisstation, einer Angabe dazu, dass das UE zu wenigstens einer Gruppe von UEs für eine Ressourcenzuweisung auf Gruppenniveau gehört, wobei die Ressourcenzuweisung auf Gruppenniveau wenigstens teilweise auf der Position des UE basiert,
Empfangen (720), von der Basisstation, einer Zuweisung von Ressourcen, die einen Pool von Ressourcen aufweisen, die der wenigstens einen Gruppe von UEs zugewiesen sind, und
Reservieren (730) eines Teilsatzes von Ressourcen des Pools von Ressourcen für eine Kommunikation zu wenigstens einem anderen UE.

2. Verfahren nach Anspruch 1, wobei das Reservieren des Teilsatzes von Ressourcen des Pools von Ressourcen für eine Kommunikation aufweist:
Durchführen einer Erfassungsprozedur für das Reservieren des Teilsatzes von Ressourcen des Pools von Ressourcen für eine Kommunikation.

3. Verfahren nach Anspruch 2, wobei die Erfassungsprozedur eine Listen-before-Talk (LBT)-Prozedur aufweist.

4. Verfahren nach Anspruch 1, wobei das Empfangen der Zuweisung von Ressourcen aufweist:
Empfangen eines Segments eines Gesamtsatzes von Ressourcen gemäß einer Position der wenigstens einen Gruppe von UEs und einer Zone, in der sich die wenigstens eine Gruppe von UEs befindet, wobei das Segment des Gesamtsatzes von Ressourcen in wenigstens einer anderen Zone wiederverwendet wird.

5. Verfahren nach Anspruch 1, wobei das Empfangen der Zuweisung von Ressourcen aufweist:
Empfangen, in Antwort auf den Bericht, einer oder mehrerer Sidelink-Gewährungen, die durch die Basisstation zu der wenigstens einen Gruppe von UEs für eine räumlich gemeinsame Verwendung der einen oder mehreren Sidelink-Gewährungen zugewiesen werden.

6. Verfahren nach Anspruch 1, wobei das Reservieren des Teilsatzes von Ressourcen des Pools von Ressourcen für eine Kommunikation aufweist:
Erfassen einer Energie in einem gemeinsamen Funkfrequenzspektrum,
Rangordnen der Energie von einer höchsten Größe zu einer niedrigsten Größe für eine Vielzahl von Teilen des gemeinsamen Funkfrequenzspektrums, und
Auswählen eines Teils des gemeinsamen Funkfrequenzspektrums mit der kleinsten Energie basierend wenigstens teilweise auf der Rangordnung.

7. Verfahren nach Anspruch 1, wobei die Angabe, dass das UE zu der wenigstens einen Gruppe von UEs gehört, eine Funkressourcensteuerung-Neukonfiguration (Radio Resource Control Reconfiguration bzw. RRCReconfiguration)-Nachricht aufweist, die einen Gruppenindex aufweist, der angibt, dass das UE zu der wenigstens einen Gruppe von UEs gehört, oder wobei die Angabe dazu, dass das UE zu der wenigstens einen Gruppe von UEs gehört, Abwärtsstrecke-Steuerinformationen (Downlink Control Information bzw. DCI) aufweist, die einen Gruppenindex aufweisen, der angibt, dass das UE zu der wenigstens einen Gruppe von UEs gehört.

8. Verfahren nach Anspruch 1, das weiterhin aufweist:
Empfangen eines Gruppenfunknetzwerk-Temporäridentifizierers (Group Radio Network Temporary Identifier bzw. Group-RNTI), und
Bestimmen, dass der Pool von Ressourcen der wenigstens einen Gruppe von UEs zugewiesen ist, basierend wenigstens teilweise auf dem Group-RNTI.

9. Verfahren nach Anspruch 1, das weiterhin aufweist:
Berichten eines Staus für wenigstens eine Anwendungsklasse.

10. Verfahren nach Anspruch 1, das weiterhin aufweist:
Bestimmen, dass die Basisstation einen hybriden Modus eines zellularen Fahrzeug-an-Alles (Cellular Vehicle-to-Everything bzw. C-V2X)-Betriebs unterstützt, wobei das Empfangen der Angabe dazu, dass das UE zu der wenigstens einen Gruppe von UEs gehört, wenigstens teilweise darauf basiert, dass die Basisstation den hybriden Modus des C-V2X-Betriebs unterstützt.

11. Verfahren nach Anspruch 10, das weiterhin aufweist:
Wechseln von dem hybriden Modus des C-V2X-Betriebs zu einem netzgeplanten Ressourcenzuweisungsmodus des C-V2X-Betriebs, und
Empfangen, von der Basisstation, einer UE-spezifischen Zuweisung von Ressourcen für das UE.

12. Verfahren nach Anspruch 10, das weiterhin aufweist:
Wechseln von dem hybriden Modus des C-V2X-Betriebs zu einem UEautonomen Ressourcenauswahlmodus des C-V2X-Betriebs, wenn der Dienstgütegrad einen Schwellwert überschreitet.

13. Verfahren nach Anspruch 1, das weiterhin aufweist:
Senden, an die Basisstation, einer Anfrage für Ressourcen für das UE oder eine Vielzahl von UEs in der wenigstens einen Gruppe von UEs, wobei das Empfangen der Zuweisung von Ressourcen wenigstens teilweise auf der Anfrage für Ressourcen basiert, und wobei die Anfrage für Ressourcen eine Anfrage für normale Ressourcen, eine Anfrage für Ressourcen für eine ultrazuverlässige Kommunikation mit niedriger Latenz (Ultra-Reliable Low-Latency Communication bzw. URRLC) oder eine Kombination aus diesen aufweist.

14. Verfahren nach Anspruch 1, das weiterhin aufweist:
Senden, an das wenigstens eine andere UE, eines Signals in dem reservierten Teilsatz von Ressourcen des Pools von Ressourcen für eine Kommunikation.

15. Eine Vorrichtung für eine drahtlose Kommunikation, die durch ein Benutzergerät (User Equipment bzw. UE) implementiert wird, wobei die Vorrichtung aufweist:
Mittel zum Senden, an eine Basisstation, eines Berichts, der eine Position des UE angibt,
Mittel zum Empfangen, von der Basisstation, einer Angabe dazu, dass das UE zu wenigstens einer Gruppe von UEs für eine Ressourcenzuweisung auf Gruppenniveau gehört, wobei die Ressourcenzuweisung auf Gruppenniveau wenigstens teilweise auf der Position des UE basiert,
Mittel zum Empfangen, von der Basisstation, einer Zuweisung von Ressourcen, die einen Pool von Ressourcen aufweisen, die der wenigstens einen Gruppe von UEs zugewiesen sind, und
Mittel zum Reservieren eines Teilsatzes von Ressourcen des Pools von Ressourcen für eine Kommunikation zu wenigstens einem anderen UE.

## Revendications

1. Un procédé de communication sans fil mis en oeuvre par un équipement d'utilisateur, UE, le procédé comprenant :
la transmission, à une station de base, d'un rapport indiquant un emplacement de l'UE,
la réception (710), à partir de la station de base, d'une indication indiquant que l'UE appartient à au moins un groupe d'UE pour une attribution de ressources de niveau groupe, où l'attribution de ressources de niveau groupe est basée au moins en partie sur l'emplacement de l'UE,
la réception (720), à partir de la station de base, d'une attribution de ressources comprenant un groupe de ressources affectées au au moins un groupe d'UE, et
la réservation (730) d'un sous-ensemble de ressources du groupe de ressources pour une communication à au moins un autre UE.

2. Le procédé selon la Revendication 1, où la réservation du sous-ensemble de ressources du groupe de ressources pour une communication comprend :
l'exécution d'une procédure de détection destinée à la réservation du sous-ensemble de ressources du groupe de ressources pour une communication.

3. Le procédé selon la Revendication 2, où la procédure de détection comprend une procédure écouter avant de parler, LBT.

4. Le procédé selon la Revendication 1, où la réception de l'attribution de ressources comprend :
la réception d'un segment d'un ensemble total de ressources en fonction d'un emplacement du au moins un groupe d'UE et d'une zone dans laquelle se trouve le au moins un groupe d'UE, où le segment de l'ensemble total de ressources est réutilisé dans au moins une autre zone.

5. Le procédé selon la Revendication 1, où la réception de l'attribution de ressources comprend :
la réception, en réponse au rapport, d'un ou de plusieurs octrois en liaison latérale affectés par la station de base au au moins un groupe d'UE pour un partage spatial des un ou plusieurs octrois en liaison latérale.

6. Le procédé selon la Revendication 1, où la réservation du sous-ensemble de ressources du groupe de ressources pour une communication comprend :
la détection d'une énergie dans un spectre radiofréquence partagé,
le classement de l'énergie d'une quantité la plus élevée à une quantité la plus faible pour une pluralité de parties du spectre radiofréquence partagé, et
la sélection d'une partie du spectre radiofréquence partagé avec la quantité d'énergie la plus faible en fonction au moins en partie du classement.

7. Le procédé selon la Revendication 1, où l'indication indiquant que l'UE appartient au au moins un groupe d'UE comprend un message de reconfiguration de commande de ressource radio, RRCReconfiguration, contenant un indice de groupe indiquant que l'UE appartient au au moins un groupe d'UE, ou où l'indication indiquant que l'UE appartient au au moins un groupe d'UE comprend des informations de commande en liaison descendante, DCI, comprenant un indice de groupe indiquant que l'UE appartient au au moins un groupe d'UE.

8. Le procédé selon la Revendication 1, comprenant en outre :
la réception d'un identifiant temporaire de réseau radio, RNTI, de groupe, et
la détermination que le groupe de ressources est affecté au au moins un groupe d'UE en fonction au moins en partie du RNTI de groupe.

9. Le procédé selon la Revendication 1, comprenant en outre :
le signalement d'un encombrement pour au moins une classe d'applications.

10. Le procédé selon la Revendication 1, comprenant en outre :
la détermination que la station de base prend en charge un mode hybride de fonctionnement véhicule à tout cellulaire, C-V2X, où la réception de l'indication indiquant que l'UE appartient au au moins un groupe d'UE est basée au moins en partie sur la prise en charge par la station de base du mode hybride de fonctionnement C-V2X.

11. Le procédé selon la Revendication 10, comprenant en outre :
la commutation du mode hybride de fonctionnement C-V2X vers un mode d'attribution de ressources planifiée de réseau de fonctionnement C-V2X, et
la réception, à partir de la station de base, d'une attribution de ressources spécifique à l'UE pour l'UE.

12. Le procédé selon la Revendication 10, comprenant en outre :
la commutation du mode hybride de fonctionnement C-V2X vers un mode de sélection de ressources autonome de l'UE de fonctionnement C-V2X si un niveau de qualité de service dépasse un seuil.

13. Le procédé selon la Revendication 1, comprenant en outre :
la transmission, à la station de base, d'une demande relative à des ressources pour l'UE ou une pluralité d'UE dans le au moins un groupe d'UE, où la réception de l'attribution de ressources est basée au moins en partie sur la demande relative à des ressources, et où la demande relative à des ressources comprend une demande relative à ressources normales, une demande relative à des ressources de communication à faible latence ultra-fiable, URRLC, ou une combinaison de celles-ci.

14. Le procédé selon la Revendication 1, comprenant en outre :
la transmission, au au moins un autre UE, d'un signal dans le sous-ensemble réservé de ressources du groupe de ressources pour une communication.

15. Un appareil de communication sans fil mis en oeuvre par un équipement d'utilisateur, UE, l'appareil comprenant :
un moyen de transmission, à une station de base, d'un rapport indiquant un emplacement de l'UE,
un moyen de réception, à partir de la station de base, d'une indication indiquant que l'UE appartient à au moins un groupe d'UE pour une attribution de ressources de niveau groupe, où l'attribution de ressources de niveau groupe est basée au moins en partie sur l'emplacement de l'UE,
un moyen de réception, à partir de la station de base, d'une attribution de ressources comprenant un groupe de ressources affectée au au moins un groupe d'UE, et
un moyen de réservation d'un sous-ensemble de ressources du groupe de ressources pour une communication à au moins un autre UE.
